# EUROPEAN PATENT APPLICATION

(11) **EP 4 676 154 A1**
(43) Date of publication of application: **07.01.2026**
(21) Application number: 23924699.4
(22) Date of filing: 02.03.2023
(51) Int. Cl.: H04W 74/08

(54) **INFORMATION DETERMINATION METHOD AND APPARATUS, INFORMATION RECEIVING METHOD AND APPARATUS, AND TERMINAL, NETWORK DEVICE AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Dehns Germany Partnerschaft mbB
(86) International application number: PCT/CN2023/079427
(87) International publication number: WO 2024/178733

(57) **Abstract**

The present disclosure relates to the technical field of communications, and in particular to an information determination method and apparatus, an information receiving method and apparatus, and a terminal, a network device and a storage medium. The information determination method comprises: determining the number of transmitted preambles and random access attempt information. In the present disclosure, since a random access failure may occur when a terminal performs random access, the random access performed by the terminal can also be referred to as an access attempt. The terminal can determine the number of transmitted preambles and can also determine random access attempt information, and can then transmit the number of transmitted preambles and the random access attempt information to a base station for reference by the base station, so that the base station learns about the related condition of the terminal performing the random access.

## Description

### TECHNICAL FIELD

The present disclosure relates to a field of communication technologies, and specifically to an information determination method, an information receiving method, an information determination apparatus, an information receiving apparatus, a communication system, a terminal, a network device, and computer-readable storage mediums.

### BACKGROUND

The terminal may perform a random access (RA) by sending a preamble to the network device. In this process, some information may be generated.

### SUMMARY

Embodiments of the present disclosure provide an information determination method, an information receiving method, an information determination apparatus, an information receiving apparatus, a communication system, a terminal, a network device, and computer-readable storage mediums, to solve the technical problem in the related technologies.

According to a first aspect of the embodiments of the present disclosure, an information determination method is provided. The method is performed by a terminal and includes: determining the number of transmitted preambles and random access attempt information.

According to a second aspect of the embodiments of the present disclosure, an information receiving method is provided. The method is performed by a network device and includes: receiving the number of transmitted preambles and random access attempt information determined by the terminal according to the information determination method.

According to a third aspect of the embodiments of the present disclosure, an information determination apparatus is provided. The apparatus includes a processing module, configured to determine the number of transmitted preambles and random access attempt information.

According to a fourth aspect of the embodiments of the present disclosure, an information receiving apparatus is provided. The apparatus includes: a receiving module, configured to receive the number of transmitted preambles and random access attempt information determined by the terminal according to the information determination method.

According to a fifth aspect of the embodiments of the present disclosure, a communication system is provided. The communication system includes a terminal and a network device, where the terminal is configured to implement the information determination method, and the network device is configured to implement the information receiving method.

According to a sixth aspect of the embodiments of the present disclosure, a terminal is provided. The terminal includes: one or more processors; and a memory storing a computer program, where when the computer program is executed by the one or more processors, the information determination method is implemented.

According to a seventh aspect of the embodiments of the present disclosure, a network device is provided. The network device includes: one or more processors; and a memory storing a computer program, where when the computer program is executed by the one or more processors, the information receiving method is implemented.

According to an eighth aspect of the embodiments of the present disclosure, a computer-readable storage medium is provided. The computer-readable storage medium is configured to store a computer program; where when the computer program is executed by one or more processors, the information determination method is implemented.

According to a ninth aspect of the embodiments of the present disclosure, a computer-readable storage medium is provided. The computer-readable storage medium is configured to store a computer program; where when the computer program is executed by one or more processors, the information receiving method is implemented.

According to the embodiments of the present disclosure, because there may be a situation where the random access fails when the terminal performs the random access, the random access performed by the terminal may also be referred to as an access attempt. The terminal may determine the number of transmitted preambles, and may further determine the random access attempt information, and then the terminal may send the number of transmitted preambles and the random access attempt information to the base station for reference by the base station, so that the base station knows a related situation of the terminal performing the random access.

The terminal may determine the number of transmitted preambles associated with the SSB and/or the CSI-RS, and the number of transmitted preambles may be equal to a sum of a first preamble transmission number for which the LBT corresponding to preamble transmissions associated with the SSB and/or the CSI-RS succeeds, and a second preamble transmission number for which the LBT corresponding to the preamble transmissions associated with the SSB and/or the CSI-RS fails.

Therefore, the determined number of transmitted preambles includes both the first preamble transmission number for which the LBT corresponding to preamble transmissions associated with the SSB and/or the CSI-RS succeeds, and the second preamble transmission number for which the LBT corresponding to the preamble transmissions associated with the SSB and/or the CSI-RS succeeds. Although the first preamble transmission number may be equal to 0, the second preamble transmission number may not be equal to 0. Therefore, when recording the number of transmitted preambles in the numberOfPreamblesSent field, it is beneficial to ensure that the value of the numberOfPreamblesSent field is not 0.

In addition, the determined random access attempt information only includes the random access attempt information for which the LBT corresponding to the preamble transmissions associated with the SSB and/or the CSI-RS succeeds, and does not include the random access attempt information for which the LBT corresponding to the preamble transmissions associated with the SSB and/or the CSI-RS fails. Therefore, it is beneficial to avoid that the terminal determines and records some unnecessary information, thereby avoiding wasting resources.

### BRIEF DESCRIPTION OF DRAWINGS

To more clearly describe technical solutions in embodiments of the present disclosure, accompanying drawings that need to be used in description of the embodiments will be briefly described below. Obviously, the accompanying drawings described below are for only some of the embodiments of the present disclosure, and those skilled in the art may also obtain other drawings based on these accompanying drawings without any creative efforts.
FIG. 1 is a schematic diagram of an application scenario shown according to an embodiment of the present disclosure.
FIG. 2 is a schematic flowchart of an information determination method shown according to an embodiment of the present disclosure.
FIG. 3 is a schematic flowchart of another information determination method shown according to an embodiment of the present disclosure.
FIG. 4 is a schematic flowchart of still another information determination method shown according to an embodiment of the present disclosure.
FIG. 5 is a schematic diagram of interaction between a terminal and a network device shown according to an embodiment of the present disclosure.
FIG. 6 is a schematic flowchart of an information receiving method shown according to an embodiment of the present disclosure.
FIG. 7 is a schematic block diagram of an information determination apparatus shown according to an embodiment of the present disclosure.
FIG. 8 is a schematic block diagram of an information receiving apparatus shown according to an embodiment of the present disclosure.
FIG. 9 is a schematic block diagram of an information receiving apparatus shown according to an embodiment of the present disclosure.
FIG. 10 is a schematic block diagram of an information determination apparatus shown according to an embodiment of the present disclosure.

### DETAILED DESCRIPTION

The implementations or embodiments of the present disclosure are not exhaustive, are merely illustrative of a part of implementations or embodiments, and are not intended to specifically limit the protection scope of the present disclosure. In a case of no contradiction, each of steps in a certain implementation or embodiment may be implemented as an independent embodiment, and the steps may be arbitrarily combined each other. For example, a solution after a part of steps is removed in a certain implementation or embodiment may also be implemented as an independent embodiment, and an order of each of the steps in a certain implementation or embodiment may be arbitrarily exchanged. In addition, optional manners or optional examples of a certain implementation or embodiment may be arbitrarily combined. In addition, each of the implementations or embodiments may be arbitrarily combined. For example, a part of or all of steps in different implementations or embodiments may be arbitrarily combined, and a certain implementation or embodiment may be arbitrarily combined with optional manners or optional examples of other implementations or embodiments.

In some implementations or embodiments, "in response to," "in a case of," "when," "while," "if," "in case that," and the like in the present disclosure may be replaced with each other.

In some implementations or embodiments, reciting manners, such as "A or B", "A and/or B", "at least one of A or B", "in one case of A, or in another case of B", "in response to one case of A, or in response to another case of B", of the present disclosure may include, according to the situation, at least one of the following technical solutions: performing A independently of B, that is, performing A in some implementations or embodiments; performing B independently of A, that is, performing B in some implementations or embodiments; selectively performing A or B, that is, selectively performing A or B in some implementations or embodiments; or performing both A and B, that is, performing A and B in some implementations or embodiments.

In some implementations or embodiments, "including A", "comprising A", "indicating A", and "carrying A" in the present disclosure may be interpreted as directly carrying A, or may be interpreted as indirectly indicating A.

In addition, each element, each row, or each column in the table involved in the present disclosure may be implemented as an independent embodiment, and combinations of any element, any row, or any column may also be implemented as an independent embodiment.

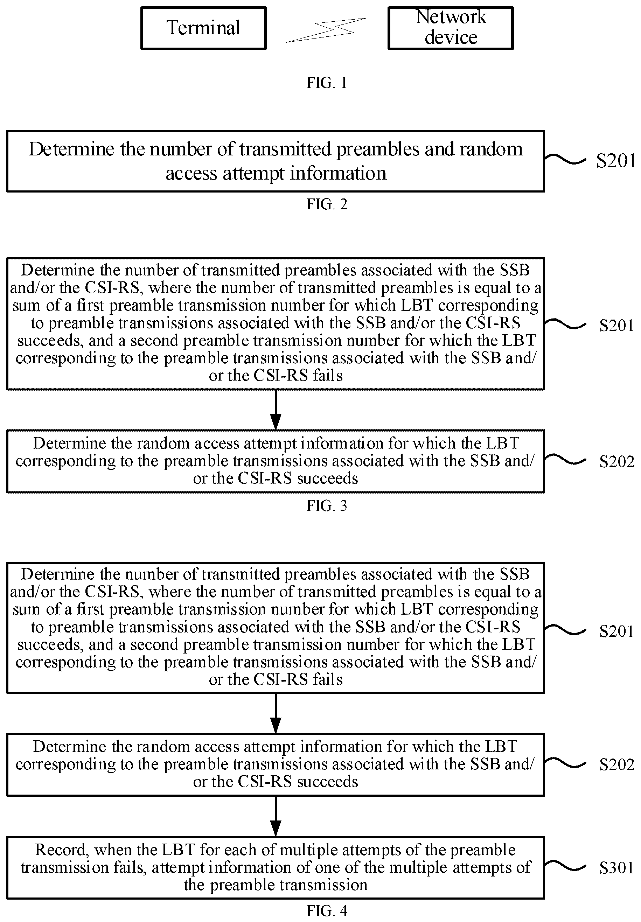

FIG. 1 is a schematic diagram of an application scenario shown according to an embodiment of the present disclosure.

As shown in FIG. 1, the embodiment of the present disclosure may be applied to a scenario in which a terminal communicates with a network device, but is not limited to this scenario. Each of bodies shown in FIG. 1 is an example, and the implementations or embodiments of the present disclosure may include all or a part of the bodies in FIG. 1, or may include other bodies than FIG. 1. The number of the bodies is arbitrary and not limited to FIG. 1. Each connection relationship shown in FIG. 1 is an example, and any one body may not be connected or connected each other. The connection may be in any manner. The connection may be a direct connection or an indirect connection, may be a wired connection, or may be a wireless connection.

In an embodiment, the terminal includes but is not limited to a communication apparatus, such as a mobile phone, a tablet computer, a wearable device, a sensor, an Internet of Things device, etc. The terminal may communicate with a network device, and the network device includes but is not limited to a network device in a communication system such as 4G, 5G, and 6G, for example, a base station, a core network, etc.

FIG. 2 is a schematic flowchart of an information determination method shown according to an embodiment of the present disclosure. The information determination method shown according to this embodiment may be performed by the terminal. As shown in FIG. 2, the information determination method may include the following step S201.

At step S201, the number of transmitted preambles and random access attempt information are determined.

In an embodiment, because there may be a situation where the random access fails when the terminal performs the random access, the random access performed by the terminal may also be referred to as an access attempt. The terminal may determine the number of transmitted preambles, and may further determine the random access attempt information, and then the terminal may send the number of transmitted preambles and the random access attempt information to the base station for reference by the base station, so that the base station knows a related situation of the terminal performing the random access.

In an embodiment, the terminal may receive a synchronization signal and PBCH block (SSB, where the PBCH is fully referred to as a physical broadcast channel) transmitted by the network device, or may receive a channel state information reference signal (CSI-RS) transmitted by the network device.

There may be a mapping relationship between the SSB and/or the CSI-RS and a beam transmitted by the network device, and the terminal may determine, according to the received SSB and/or CSI-RS, a beam to which the SSB and/or the CSI-RS is mapped, and further determine, according to the beam, the random access resource for transmitting the preamble. The terminal transmits the preamble by the random access resource, which may be referred to as the preamble transmission associated with the SSB and/or the CSI-RS.

In an embodiment, before the terminal performs the preamble transmission associated with the SSB and/or the CSI-RS in an unlicensed frequency band, the terminal needs to detect the unlicensed frequency band, to determine whether the unlicensed frequency band is idle, which may be implemented by listen before talk (LBT), for example. When it is determined that the unlicensed frequency band is idle and the LBT succeeds, the preamble may be successfully transmitted on the unlicensed frequency band, and when it is determined that the unlicensed frequency band is idle and the LBT fails, the preamble transmission on the unlicensed frequency band will fail.

The terminal may perform the LBT each time before performing the preamble transmissions associated with the SSB and/or the CSI-RS, where the LBT may be referred to as the LBT corresponding to the preamble transmissions associated with the SSB and/or the CSI-RS.

In an embodiment, the terminal may record the number of transmitted preambles, or may record the random access attempt information.

For example, the number of transmitted preambles may be recorded by a numberOfPreamblesSentOnSSB field. For example, the number of transmitted preambles is recorded by a numberOfPreamblesSentOnCSI-RS field.

When the LBT corresponding to the preamble transmission associated with the SSB and/or the CSI-RS fails, the preamble transmission associated with the SSB and/or the CSI-RS also fails. Correspondingly, when the LBT corresponding to the preamble transmission associated with the SSB and/or the CSI-RS fails, the preamble transmission associated with the SSB and/or the CSI-RS may succeed.

If the recorded number of transmitted preambles includes only the number of the preamble transmissions for which the LBT corresponding to the preamble transmissions associated with the SSB and/or the CSI-RS succeeds, for example, referred to as a first preamble transmission number, when all LBT corresponding to the preamble transmissions associated with the SSB and/or the CSI-RS fails, the first preamble transmission number is equal to 0, and then a value of the numberOfPreamblesSent field (for example, the numberOfPreamblesSentOnSSB field and/or the numberOfPreamblesSentOnCSI-RS field) is equal to 0. However, currently, it is required that the value of the numberOfPreamblesSent field cannot be equal to 0, and the addition of a new information element (IE) is not supported in a parent IE of the numberOfPreamblesSent field to indicate 0.

In addition, when the LBT corresponding to the preamble transmission associated with the SSB and/or the CSI-RS fails, the random access attempt information has little or no significance for the network device. If the recorded random access attempt information includes the random access attempt information for which the LBT corresponding to the preamble transmissions associated with the SSB and/or the CSI-RS fails and the random access attempt information for which the LBT corresponding to the preamble transmissions associated with the SSB and/or the CSI-RS succeeds, the terminal will determine and record some unnecessary information, thereby wasting resources.

In an embodiment, the network device may determine, according to a list size of a numberOfPreamblesSent-perRAAttemptInfoList field, a total number of LBT failures corresponding to preamble transmissions associated with the SSB and/or the CSI-RS.

FIG. 3 is a schematic flowchart of another information determination method shown according to an embodiment of the present disclosure. The information determination method shown according to this embodiment may be performed by the terminal. As shown in FIG. 3, determining the number of transmitted preambles and random access attempt information includes the following steps S301-S302.

At step S301, the number of transmitted preambles associated with a synchronization signal and physical broadcast channel block (SSB) and/or a channel state information reference signal (CSI-RS) is/are determined, where the number of transmitted preambles is equal to a sum of a first preamble transmission number for which listen before talk (LBT) corresponding to preamble transmissions associated with the SSB and/or the CSI-RS succeeds, and a second preamble transmission number for which the LBT corresponding to the preamble transmissions associated with the SSB and/or the CSI-RS fails.

At step S302, the random access attempt information for which the LBT corresponding to the preamble transmissions associated with the SSB and/or the CSI-RS succeeds is determined. The steps S301 and S302 may be performed in no order.

It should be noted that the embodiment shown in FIG. 3 may be implemented independently, or may be implemented in combination with at least one other embodiment in the present disclosure, which may be specifically selected as required, and is not limited in the present disclosure.

According to an embodiment of the present disclosure, the terminal may determine the number of transmitted preambles associated with the SSB and/or the CSI-RS, and the number of transmitted preambles may be equal to a sum of a first preamble transmission number for which the LBT corresponding to preamble transmissions associated with the SSB and/or the CSI-RS succeeds, and a second preamble transmission number for which the LBT corresponding to the preamble transmissions associated with the SSB and/or the CSI-RS fails.

Therefore, the determined number of transmitted preambles includes both the first preamble transmission number for which the LBT corresponding to preamble transmissions associated with the SSB and/or the CSI-RS succeeds, and the second preamble transmission number for which the LBT corresponding to the preamble transmissions associated with the SSB and/or the CSI-RS succeeds. Although the first preamble transmission number may be equal to 0, the second preamble transmission number may not be equal to 0. Therefore, when recording the number of transmitted preambles in the numberOfPreamblesSent field, it is beneficial to ensure that the value of the numberOfPreamblesSent field is not 0.

In addition, the determined random access attempt information only includes the random access attempt information for which the LBT corresponding to the preamble transmissions associated with the SSB and/or the CSI-RS succeeds, and does not include the random access attempt information for which the LBT corresponding to the preamble transmissions associated with the SSB and/or the CSI-RS fails. Therefore, it is beneficial to avoid that the terminal determines and records some unnecessary information, thereby avoiding wasting resources.

In an embodiment, the information determination method further includes: determining, when there is a preamble transmission for which the LBT fails between multiple preamble transmissions for which the LBT succeeds, that the multiple preamble transmissions for which the LBT succeeds are continuous random access attempts.

For one SSB and/or CSI-RS, the terminal may record continuous random access attempts associated with the SSB and/or CSI-RS, where the terminal may record only the random access attempt for which the LBT corresponding to preamble transmissions associated with the SSB and/or CSI-RS succeeds. When there is a preamble transmission for which the LBT fails between multiple preamble transmissions for which the LBT succeeds, the terminal may still determine the multiple preamble transmissions for which the LBT succeeds as continuous random access attempts.

For example, the terminal may record, by the information element PerRAAttemptInfo, each of RA attempts for which the LBT corresponding to the preamble transmissions associated with the SSB and/or the CSI-RS succeeds.

FIG. 4 is a schematic flowchart of still another information determination method shown according to an embodiment of the present disclosure. The information determination method shown according to this embodiment may be performed by the terminal. As shown in FIG. 4, the information determination method further includes the following step S401.

At step S401, when the LBT for each of multiple attempts of the preamble transmission fails, attempt information of one of the multiple attempts of the preamble transmission is recorded.

It should be noted that the embodiment shown in FIG. 4 may be implemented independently, or may be implemented in combination with at least one other embodiment in the present disclosure, which may be specifically selected as required, and is not limited in the present disclosure.

In an embodiment, when the LBT for each of multiple attempts of the preamble transmission fails, the random access attempt information for attempting to transmit the preamble each time belongs to unnecessary information, but currently, it is required that any random access attempt information cannot be non-recorded, so attempt information of one of the multiple attempts of the preamble transmission may be selected and recorded, thereby ensuring that requirements are met.

In an embodiment, the recorded attempt information of one of the multiple attempts of the preamble transmission includes one of:
the attempt information of a first attempt in the multiple attempts of the preamble transmission; or
the attempt information of a last attempt in the multiple attempts of the preamble transmission.

In an embodiment, the attempt information does not include at least one of:
whether a contention field is detected, for example, a contentionDetected field; in an embodiment, the field is used to indicate whether the contention is detected;
whether a downlink reference signal receiving power (RSRP) is greater than a threshold, for example, a dlRSRPAboveThreshold field; or
whether a 4-step random access is fallen back, for example, a fallbackToFourStepRA field.

By not recording at least one of the above attempt information, after the terminal sends the attempt information to the network device, the network device may determine, based on content that is not recorded in the attempt information, whether the received attempt information is the random access attempt information for which the LBT corresponding to the preamble transmission fails.

For example, when the attempt information is the random access attempt information for which the LBT corresponding to the preamble transmission fails, the terminal may configure that the attempt information may not include any one of the above three items of content, and send the attempt information to the network device. After receiving the attempt information, the network device determines that the attempt information does not include any one of the above three items of content, and therefore may determine that the attempt information is the random access attempt information for which the LBT corresponding to the preamble transmission fails. Further, based on this, the network device may further calculate the number of preamble transmissions for which the LBT corresponding to the preamble transmissions fails.

For example, when it is appointed that the attempt information does not include each of the above three items of content, the attempt information is the random access attempt information for which the LBT corresponding to the preamble transmission fails. Therefore, when the attempt information is the random access attempt information for which the LBT corresponding to the preamble transmission fails, the attempt information sent by the terminal to the base station does not include each of the above three items. The network device may determine, according to the received attempt information not including each of the above three items of content, that the attempt information is the random access attempt information for which the LBT corresponding to the preamble transmission fails.

For example, when it is appointed that the attempt information does not include whether the downlink RSRP is greater than the threshold, the attempt information is the random access attempt information for which the LBT corresponding to the preamble transmission fails. Therefore, when the attempt information is the random access attempt information for which the LBT corresponding to the preamble transmission fails, the attempt information sent by the terminal to the base station does not include whether the downlink RSRP is greater than the threshold. The network device may determine, according to the received attempt information not including whether the downlink RSRP is greater than the threshold, that the attempt information is the random access attempt information for which the LBT corresponding to the preamble transmission fails.

In an embodiment, the attempt information includes first indication information, where the indication information indicates whether the LBT fails before one attempt of the preamble transmission corresponding to the attempt information.

The terminal may send the attempt information to the network device. Because the attempt information includes the first indication information, the network device may determine, according to the first indication information, whether the attempt information is the random access attempt information for which the LBT corresponding to the preamble transmission fails. Further, based on this, the network device may further calculate the number of preamble transmissions for which the LBT corresponding to the preamble transmissions fails.

In an embodiment, the attempt information includes second indication information, where the second indication information indicates whether an LBT failure occurs between the preamble transmission for which the LBT corresponding to the attempt information succeeds and the preamble transmission for which the LBT succeeds for a previous time.

The terminal may carry the second indication information in the attempt information and send the attempt information to the network device, and the network device may determine, according to the second indication information, whether an LBT failure occurs between the preamble transmission for which the LBT corresponding to the received attempt information succeeds and the preamble transmission for which the LBT succeeds for a previous time.

In an embodiment, the preamble transmission for which the LBT corresponding to the attempt information succeeds and the preamble for which the LBT succeeds for the previous time may be associated with a same SSB and/or CSI-RS. If there is no preamble for which the LBT succeeds before the preamble transmission for which the LBT corresponding to the attempt information succeeds, the first preamble transmission (also known as random access attempt) in preamble transmissions associated with the SSB and/or CSI-RS may be dynamically started from.

In an embodiment, the attempt information includes third indication information, where the third indication information indicates the number of LBT failures between the preamble transmission for which the LBT corresponding to the attempt information succeeds and the preamble transmission for which the LBT succeeds for a previous time.

The terminal may carry the third indication information in the attempt information and send the attempt information to the network device, and the network device may determine, according to the third indication information, the number of LBT failures between the preamble transmission for which the LBT corresponding to the received attempt information succeeds and the preamble transmission for which the LBT succeeds for the previous time.

In an embodiment, the preamble transmission for which the LBT corresponding to the attempt information succeeds and the preamble transmission for which the LBT succeeds for the previous time may be associated with a same SSB and/or CSI-RS. If there is no preamble for which the LBT succeeds before the preamble transmission for which the LBT corresponding to the attempt information succeeds, the first preamble transmission (also known as random access attempt) in preamble transmissions associated with the SSB and/or CSI-RS may be dynamically started from.

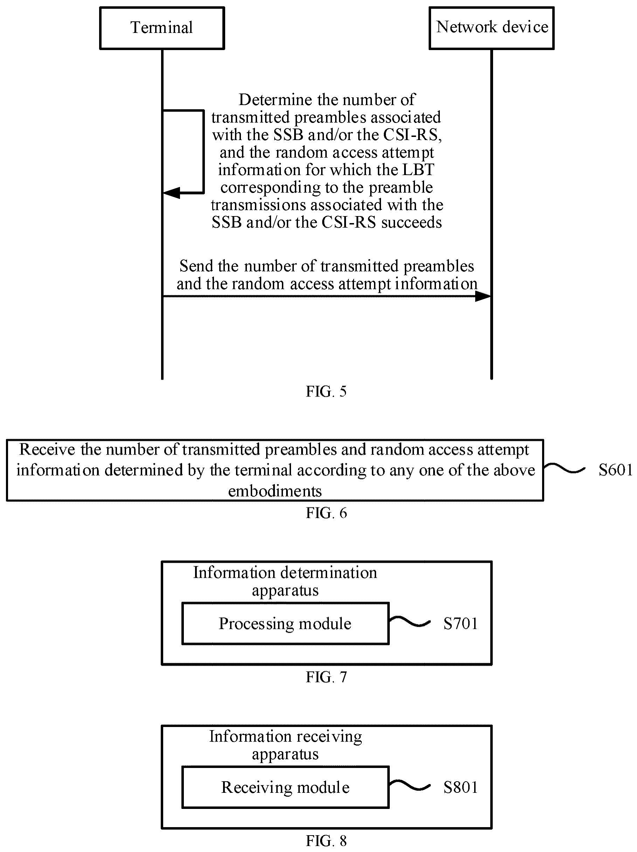

FIG. 5 is a schematic diagram of interaction between a terminal and a network device shown according to an embodiment of the present disclosure.

As shown in FIG. 5, the terminal may determine the number of transmitted preambles associated with the SSB and/or the CSI-RS, where the number of transmitted preambles is equal to a sum of a first preamble transmission number for which the LBT corresponding to preamble transmissions associated with the SSB and/or the CSI-RS succeeds, and a second preamble transmission number for which the LBT corresponding to the preamble transmissions associated with the SSB and/or the CSI-RS fails; and determine the random access attempt information for which the LBT corresponding to the preamble transmissions associated with the SSB and/or the CSI-RS succeeds.

Then, the terminal may send the number of transmitted preambles and the random access attempt information to the network device. The network device may know the situation of the terminal performing the random access, according to the number of transmitted preambles and the random access attempt information.

FIG. 6 is a schematic flowchart of an information receiving method shown according to an embodiment of the present disclosure. The information receiving method shown according to this embodiment may be performed by a network device. The network device may communicate with a terminal. The network device includes but is not limited to a base station in a communication system, such as a 4G base station, a 5G base station, a 6G base station, etc. The terminal includes but is not limited to a communication apparatus, such as a mobile phone, a tablet computer, a wearable device, a sensor, an Internet of Things device, etc.

As shown in FIG. 6, the information receiving method may include the following step S601.

At step S601, the number of transmitted preambles and random access attempt information determined by the terminal according to any one of the above embodiments are received.

In an embodiment, because there may be a situation where the random access fails when the terminal performs the random access, the random access performed by the terminal may also be referred to as an access attempt. The terminal may determine the number of transmitted preambles, and may further determine the random access attempt information, and then the terminal may send the number of transmitted preambles and the random access attempt information to the base station. The base station may refer to the number of transmitted preambles and the random access attempt information received from the terminal, to determine the related situation of the terminal performing the random access.

It should be noted that for other content in this embodiment, reference may be made to the description of related content in the above embodiments, which will be not repeated herein.

Corresponding to the above embodiments of the information determination method and the information receiving method, the present disclosure further provides embodiments of an information determination apparatus and an information receiving apparatus.

FIG. 7 is a schematic block diagram of an information determination apparatus shown according to an embodiment of the present disclosure. As shown in FIG. 7, the information determination apparatus includes:

a processing module 701, configured to determine the number of transmitted preambles and random access attempt information.

In an embodiment, the processing module is configured to determine the number of transmitted preambles associated with the SSB and/or the CSI-RS, where the number of transmitted preambles is equal to a sum of a first preamble transmission number for which listen before talk (LBT) corresponding to preamble transmissions associated with the SSB and/or the CSI-RS succeeds, and a second preamble transmission number for which the LBT corresponding to the preamble transmissions associated with the SSB and/or the CSI-RS fails; and determine the random access attempt information for which the LBT corresponding to the preamble transmissions associated with the SSB and/or the CSI-RS succeeds.

In an embodiment, the processing module is further configured to determine, when there is a preamble transmission for which the LBT fails between multiple preamble transmissions for which the LBT succeeds, that the multiple preamble transmissions for which the LBT succeeds are continuous random access attempts.

In an embodiment, the apparatus further includes: a recording module, configured to record, when the LBT for each of multiple attempts of the preamble transmission fails, attempt information of one of the multiple attempts of the preamble transmission.

In an embodiment, the recorded attempt information of one of the multiple attempts of the preamble transmission includes one of:
the attempt information of a first attempt in the multiple attempts of the preamble transmission; or
the attempt information of a last attempt in the multiple attempts of the preamble transmission.

In an embodiment, the attempt information does not include at least one of:
whether a contention field is detected;
whether a downlink reference signal receiving power is greater than a threshold; or
whether a 4-step random access is fallen back.

In an embodiment, the attempt information includes first indication information, where the indication information indicates whether the LBT fails before one attempt of the preamble transmission corresponding to the attempt information.

In an embodiment, the attempt information includes second indication information, where the second indication information indicates whether an LBT failure occurs between the preamble transmission for which the LBT corresponding to the attempt information succeeds and the preamble transmission for which the LBT succeeds for a previous time.

In an embodiment, the attempt information includes third indication information, where the third indication information indicates the number of LBT failures between the preamble transmission for which the LBT corresponding to the attempt information succeeds and the preamble transmission for which the LBT succeeds for a previous time.

FIG. 8 is a schematic block diagram of an information receiving apparatus shown according to an embodiment of the present disclosure. As shown in FIG. 8, the information receiving apparatus includes:
a receiving module 801, configured to receive the number of transmitted preambles and random access attempt information determined by the terminal according to the method of any one of claims 1 to 9.

In an embodiment, a field used by the terminal to record the number of preambles transmitted on the SSB/CSI-RS is configured as the number of times that the terminal attempts to transmit the preamble on the SSB/CSI-RS (or, the number of attempts of the preamble transmission of the terminal on the SSB/CSI-RS), regardless of whether the LBT for the preamble transmission succeeds. The IE recording each RA attempt information on the SSB/CSI-RS, only records the RA attempt information for which the LBT for the preamble succeeds.

For example, a field used by the terminal to record the number of preambles transmitted on the SSB/CSI-RS is numberOfPreamblesSentOnSSB-r16/numberOfPreamblesSentOnCSI-RS-r16. The IE for the terminal recording each RA attempt information on the SSB/CSI-RS is perRAAttemptInfoList-r16.

For example, the total number of LBT failures on the SSB/CSI-RS may be obtained by the list size of numberOfPreamblesSent-perRAAttemptInfoList.

In an embodiment, for one SSB or CSI-RS, the terminal records continuous RA attempts (only records RA attempts for which the LBT for the preamble succeeds) thereon. For multiple preamble transmissions on the same SSB/CSI-RS, if there is a preamble transmission for which the LBT fails between multiple preamble transmissions for which the LBT succeeds, the terminal still considers that the preamble transmissions for which the LBT succeeds are continuous.

For example, the terminal records each of the RA attempts for which the LBT for the preambles succeeds through the PerRAAttemptInfo-r16 IE.

In an embodiment, if the LBT for the preamble transmissions for all RA attempts of the terminal on one SSB/CSI-RS fails, the terminal records RA attempt information of one of all the RA attempts.

For example, the recorded RA attempt information is the last RA attempt or the first RA attempt.

In an embodiment, the RA attempt information does not indicate at least one or all of the following information: whether the contention field is detected, whether the DL RSRP is greater than a threshold, or whether the 4-step random access is fallen back.

For example, whether the contention field, contentionDetected-r16, is detected; whether the DL RSRP is greater than the threshold, dIRSRPAboveThreshold-r16; and whether the 4-step random access, fallbackToFourStepRA-r17, is fallen back.

For example, the RA attempt information may not include all of the above information, or may only include whether the DL RSRP is greater than the threshold.

For example, the terminal determines, by the RA attempt information not including any or a part of fields, that the LBT for the RA attempt fails, so that the number of preambles for which the LBT succeeds may be calculated.

In an embodiment, the RA attempt information indicates whether the LBT for the attempt fails.

For example, the terminal may calculate the number of preambles for which the LBT succeeds, through the information.

In an embodiment, the terminal records, in the information recording the RA attempt for which the LBT for the preamble succeeds, whether the LBT failure occurs between this attempt and the RA attempt for which the LBT for the preamble succeeds for the previous time.

For example, both the RA attempt for which the LBT for the preamble succeeds for the previous time and this attempt belong to the current SSB/CSI-RS, and if there is no RA attempt for which the LBT for the preamble succeeds before this attempt, the first RA attempt on the SSB/CSI-RS (regardless of whether the LBT for the preamble succeeds) is started from.

In an embodiment, the terminal records, in the information recording the RA attempt for which the LBT for the preamble succeeds, the number of the LBT failures between this attempt and the RA attempt for which the LBT for the preamble succeeds for the previous time.

For example, both the RA attempt for which the LBT for the preamble succeeds for the previous time and this attempt belong to the current SSB/CSI-RS, and if there is no RA attempt for which the LBT for the preamble succeeds before this attempt, the first RA attempt on the SSB/CSI-RS (regardless of whether the LBT for the preamble succeeds) is started from.

Since the embodiments of the apparatuses substantially corresponds to the embodiments of the methods, and the related content may refer to the description of the embodiments of the methods. The apparatus embodiments described above are only schematic. The modules explained as separate components may be or may not be physically separated, and the components displayed as modules may be or may not be physical modules, that is, they may be located in one place or may be distributed across multiple network modules. A part or all of modules may be selected according to actual needs to achieve the purpose of the solutions in these embodiments. Those skilled in the art may understand and implement other embodiments without a creative work.

An embodiment of the present disclosure further provides a communication system, including a terminal and a network device, where the terminal is configured to implement the information determination method in any one of the above embodiments, and the network device is configured to implement the information receiving method in any one of the above embodiments.

An embodiment of the present disclosure further provides a terminal, including: one or more processors; and a memory storing a computer program, where when the computer program is executed by the one or more processors, the information determination method of any one of the above embodiments is implemented.

An embodiment of the present disclosure further provides a network device, including: one or more processors; and a memory storing a computer program, where when the computer program is executed by the one or more processors, the information receiving method of any one of the above embodiments is implemented.

An embodiment of the present disclosure further provides a computer-readable storage medium, configured to store a computer program; where when the computer program is executed by the one or more processors, the information determination method of any one of the above embodiments is implemented.

An embodiment of the present disclosure further provides a computer-readable storage medium, configured to store a computer program; where when the computer program is executed by the one or more processors, the information receiving method of any one of the above embodiments is implemented.

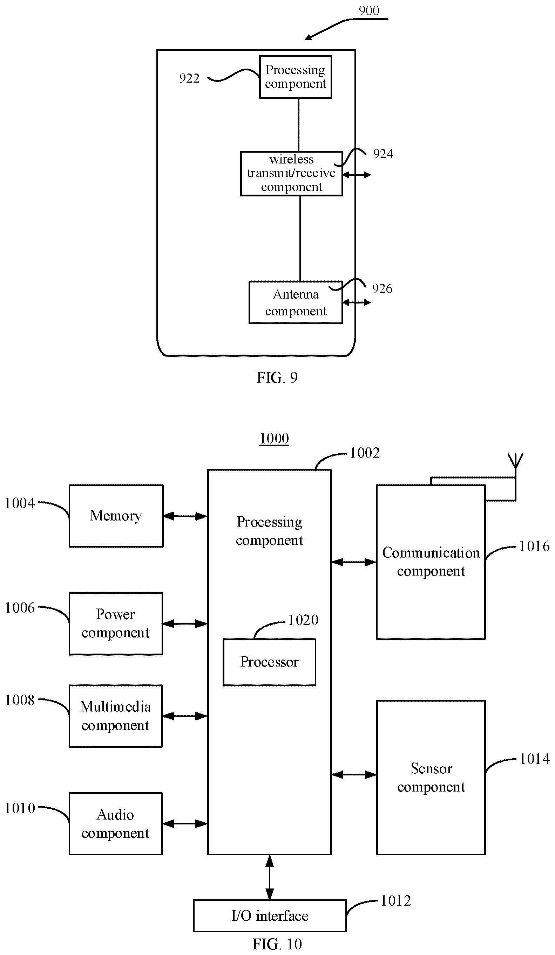

As shown in FIG. 9, FIG. 9 is a schematic block diagram of an information receiving apparatus 900 shown according to an embodiment of the present disclosure. The apparatus 900 may be the base station. Referring to FIG. 9, the apparatus 900 includes a processing component 922, a wireless transmit/receive component 924, an antenna component 926, and a signal processing part specific to a wireless interface. The processing component 922 may further include one or more processors. One processor of the processing component 922 may be configured to implement the information receiving method of any one of the above embodiments.

FIG. 10 is a schematic block diagram of an information determination apparatus 1000 shown according to an embodiment of the present disclosure. For example, the apparatus 1000 may be a terminal, such as a mobile phone, a computer, a digital broadcast terminal, a message transceiving device, a game console, a tablet device, a medical device, a fitness device, a personal digital assistant, etc.

Referring to FIG. 10, the apparatus 1000 may include one or more of the following components: a processing component 1002, a memory 1004, a power component 1006, a multimedia component 1008, an audio component 1010, an input/output (I/O) interface 1012, a sensor component 1014, and a communication component 1016.

The processing component 1002 typically controls the overall operation of the apparatus 1000, such as operations associated with display, phone calls, data communication, camera operations, and recording operations. The processing component 1002 may include one or more processors 1020 to execute instructions to implement all or part of the steps of the information determination method in any one of the above embodiments. Additionally, the processing component 1002 may include one or more modules to facilitate interaction between the processing component 1002 and other components. For example, the processing component 1002 may include a multimedia module to facilitate interaction between the multimedia component 1008 and the processing component 1002.

The memory 1004 is configured to store various types of data to support operations of the apparatus 1000. Examples of such data include instructions, contact data, phonebook data, messages, pictures, videos, etc., for any application program or method operating on the apparatus 1000.

The power component 1006 provides power to various components of the apparatus 1000. The power component 1006 may include a power supply management system, one or more power supplies, and other components that are associated with generating, managing, and distributing power for the apparatus 1000.

The multimedia component 1008 includes a screen providing an output interface between the apparatus 1000 and the user. In some embodiments, the screen may include a liquid crystal display (LCD) and a touch panel (TP). If the screen includes the touch panel, the screen may be implemented as a touch screen, to receive an input signal from the user.

The audio component 1010 is configured to output and/or input audio signals. For example, the audio component 1010 includes a microphone (MIC). The microphone is configured to receive external audio signals when the apparatus 1000 is in the operating mode, such as a call mode, a recording mode, and a speech recognition mode. The received audio signals may be further stored in the memory 1004 or sent via the communication component 1016. In some embodiments, the audio component 1010 also includes a speaker for outputting the audio signals.

The I/O interface 1012 provides an interface between the processing component 1002 and peripheral interface modules. The peripheral interface modules may be keyboards, click wheels, buttons, etc. These buttons may include but are not limited to: a home button, a volume button, a start button, and a lock button.

The sensor component 1014 includes one or more sensors to provide various aspects of state assessment for the apparatus 1000.

The communication component 1016 is configured to facilitate wired or wireless communication between the apparatus 1000 and other devices. The apparatus 1000 may access a wireless network based on a communication standard, such as WiFi, 2G, 3G, 4G LTE, 5G NR, or a combination of them. In an exemplary embodiment, the communication component 1016 receives, via a broadcast channel, a broadcast signal or broadcast related information from an external broadcast management system. In an exemplary embodiment, the communication component 1016 further includes a near-field communication (NFC) module to facilitate short-range communication. For example, the NFC module may be implemented based on a radio frequency identification (RFID) technology, an infrared data association (IrDA) technology, an ultra-wideband (UWB) technology, a Bluetooth (BT) technology, and other technologies.

In an exemplary embodiment, the apparatus 1000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic components to perform the information determination method in any one of the above embodiments.

In an exemplary embodiment, a non-transitory computer-readable storage medium including instructions is also provided, such as the memory 1004 including the instructions. The above instructions may be executed by the processor 1020 of the apparatus 1000 to complete the information determination method in any one of the above embodiments. For example, the non-transitory computer-readable storage medium may be a ROM, a random access memory (RAM), a CD-ROM, a magnetic tape, a floppy disk, an optical data storage device, etc.

Those skilled in the art will easily come up with other implementation solutions of the present disclosure after considering the specification and practicing the present disclosure disclosed herein. The present disclosure aims to cover any variations, uses, or adaptive changes of the present disclosure, which follow general principles of the present disclosure and include common knowledge or customary technical means in the art not disclosed in the present disclosure. The specification and embodiments are only considered exemplary, and the true scope and spirit of the present disclosure are indicated by the following claims.

It should be understood that the present disclosure is not limited to the precise structure described above and shown in the accompanying drawings, and various modifications and changes may be made without departing from its scope. The scope of the present disclosure is limited only by the appended claims.

## Claims

1. An information determination method, performed by a terminal and comprising:
determining a number of transmitted preambles and random access attempt information.

2. The method of claim 1, wherein the determining a number of transmitted preambles and random access attempt information, comprises:
determining the number of transmitted preambles associated with a synchronization signal and physical broadcast channel block, SSB, and/or a channel state information reference signal, CSI-RS, wherein the number of transmitted preambles is equal to a sum of a first preamble transmission number for which listen before talk, LBT, corresponding to preamble transmissions associated with the SSB and/or the CSI-RS succeeds, and a second preamble transmission number for which the LBT corresponding to the preamble transmissions associated with the SSB and/or the CSI-RS fails; and
determining the random access attempt information for which the LBT corresponding to the preamble transmissions associated with the SSB and/or the CSI-RS succeeds.

3. The method of claim 2, further comprising:
determining, when there is a preamble transmission for which the LBT fails between multiple preamble transmissions for which the LBT succeeds, that the multiple preamble transmissions for which the LBT succeeds are continuous random access attempts.

4. The method of claim 2 or 3, further comprising:
recording, when the LBT for each of multiple attempts of the preamble transmission fails, attempt information of one of the multiple attempts of the preamble transmission.

5. The method of claim 4, wherein the recorded attempt information of one of the multiple attempts of the preamble transmission comprises one of:
the attempt information of a first attempt in the multiple attempts of the preamble transmission; or
the attempt information of a last attempt in the multiple attempts of the preamble transmission.

6. The method of claim 4 or 5, wherein the attempt information does not comprise at least one of:
whether a contention field is detected;
whether a downlink reference signal receiving power is greater than a threshold; or
whether a 4-step random access is fallen back.

7. The method of any one of claims 4 to 6, wherein the attempt information comprises first indication information, wherein the indication information indicates whether the LBT fails before one attempt of the preamble transmission corresponding to the attempt information.

8. The method of any one of claims 1 to 7, wherein the attempt information comprises second indication information, wherein the second indication information indicates whether an LBT failure occurs between a preamble transmission for which the LBT corresponding to the attempt information succeeds and the preamble transmission for which the LBT succeeds for a previous time.

9. The method of any one of claims 1 to 8, wherein the attempt information comprises third indication information, wherein the third indication information indicates a number of LBT failures between a preamble transmission for which the LBT corresponding to the attempt information succeeds and the preamble transmission for which the LBT succeeds for a previous time.

10. An information receiving method, performed by a network device and comprising:
receiving a number of transmitted preambles and random access attempt information determined by a terminal according to the method of any one of claims 1 to 9.

11. An information determination apparatus, comprising:
a processing module, configured to determine a number of transmitted preambles and random access attempt information.

12. An information receiving apparatus, comprising:
a receiving module, configured to receive a number of transmitted preambles and random access attempt information determined by a terminal according to the method of any one of claims 1 to 9.

13. A communication system, comprising a terminal and a network device, wherein the terminal is configured to implement the information determination method of any one of claims 1 to 9, and the network device is configured to implement the information receiving method of claim 10.

14. A terminal, comprising:
one or more processors; and
a memory storing a computer program;
wherein when the computer program is executed by the one or more processors, the information determination method of any one of claims 1 to 9 is implemented.

15. A network device, comprising:
one or more processors; and
a memory storing a computer program;
wherein when the computer program is executed by the one or more processors, the information receiving method of claim 10 is implemented.

16. A computer-readable storage medium, storing a computer program; wherein when the computer program is executed by one or more processors, the information determination method of any one of claims 1 to 9 is implemented.

17. A computer-readable storage medium, storing a computer program; wherein when the computer program is executed by one or more processors, the information receiving method of claim 10 is implemented.
